# EUROPÄISCHE PATENTSCHRIFT

(11) **EP 2 488 385 B1**
(45) Veröffentlichungstag und Bekanntmachung des Hinweises auf die Patenterteilung: **31.10.2018**
(21) Anmeldenummer: 10749616.8
(22) Anmeldetag: 27.08.2010
(51) Int. Cl.: B60L 11/18

(54) **LADESTATION**
CHARGING STATION
STATION DE CHARGE

(30) Priorität: 14.10.2009 DE 102009049432
(43) Veröffentlichungstag der Anmeldung: 22.08.2012
(73) Patentinhaber: SEW-EURODRIVE GmbH & Co. KG, 76646 Bruchsal (DE)
(72) Erfinder: SCHMIDT, Josef, 76676 Graben-Neudorf (DE); MAHLEIN, Jochen, 76139 Karlsruhe (DE); DIETRICH, Volker, 74626 Bretzfeld (DE); EGGER, Björn, 76646 Bruchsal (DE)
(74) Vertreter: Tüngler, Eberhard
(86) Internationale Anmeldenummer: PCT/EP2010/005270
(87) Internationale Veröffentlichungsnummer: WO 2011/044969

(56) Entgegenhaltungen:
- EP-A2- 0 788 212
- DE-A1-102007 033 654
- FR-A1- 2 732 169

## Beschreibung

Die Erfindung betrifft eine Ladestation.

Es ist bekannt, bei Transformatoren elektrische Energie von der Primärseite auf die Sekundärseite zu übertragen. Dabei wird eine starke Kopplung der beiden Seiten angestrebt, um Verluste klein und den Wirkungsgrad hoch zu halten.

Aus der DE 10 2007 033 654 A1 ist als nächstliegender Stand der Technik ein System zur berührungslosen Beladung eines Elektrofahrzeugs bekannt.

Aus der EP 0 788 212 A2 eine Verbindungsmethode bei der Wartung eines Elektrofahrzeugs bekannt.

Aus der FR 2 732 169 A1 ist eine Anordnung zum Aufladen der Batterieen eines Fahrzeugs bekannt.

Aus der DE 10 2008 013 580 A1 ist eine Anordnung von mit Sensoren verbundenen Chips in einem mehrlagigen Bodenbelag bekannt, wobei eine mäanderförmige Primärspule vorgesehen ist.

Der Erfindung liegt daher die Aufgabe zugrunde, eine Ladestation mit verbessertem Wirkungsgrad weiterzubilden.

Erfindungsgemäß wird die Aufgabe bei der Ladestation nach den in Anspruch 1 angegebenen Merkmalen gelöst.

Von Vorteil ist dabei, dass das Fahrzeug in eine optimale Position bringbar ist in besonders einfacher Weise. Insbesondere ist die Mulde sehr einfach herstellbar und erkennbar. Auch eine Kennzeichnung der Mulde ist besonders einfach ausführbar.

Erfindungsgemäß ist der Primärleiter mäanderförmig verlegt.

Erfindungsgemäß umfasst eine stationäre Einheit eine Anzeigevorrichtung, insbesondere zum Anzeigen des Erreichens der Position, eines Maßes an induktiver Kopplungsstärke und/oder eines Mindestwertes an übertragbarer Leistung. Von Vorteil ist dabei, dass bei Nicht-Erreichen der gewünschten Werte ein Fehler oder eine Warnung herausgebbar ist. Außerdem ist ein Korrigieren der Position ausführbar.

Bei einer vorteilhaften Ausgestaltung ist das Fahrzeug selbstpositionierend betreibbar,
insbesondere also der Antrieb des Fahrzeugs abkoppelbar ist von den als Antriebsrädern wirkenden Rädern, insbesondere wodurch das Fahrzeug in den tiefsten Punkt sich einpendelt oder positioniert. Von Vorteil ist dabei, dass mittels Auskuppeln das Fahrzeug auf dem tiefsten Punkt zu stehen kommt und somit in die Sollposition gebracht ist zur Erreichung eines hohen Wirkungsgrades.

Bei einer vorteilhaften Ausgestaltung wird der Primärleiter von einer Einspeisung, insbesondere mit Abrechnungssystem, mit einem mittelfrequenten Wechselstrom beaufschlagt. Von Vorteil ist dabei, dass ein hoher Wirkungsgrad erreichbar ist.

Bei einer vorteilhaften Ausgestaltung ist der Sekundärwicklung eine Kapazität derart in Reihe und/oder parallel zugeschaltet, dass die zugehörige Resonanzfrequenz im Wesentlichen der Mittelfrequenz entspricht. Von Vorteil ist dabei, dass auch bei kleinen Abweichungen von der Sollposition infolge der resonanten Übertragung auch bei der vorliegenden schwachen Kopplung ein hoher Wirkungsgrad erreichbar ist.

Bei einer vorteilhaften Ausgestaltung ist der Primärleiter und die der Sekundärwicklung jeweils als Ringwicklung verlegt, wobei die Ringwicklungen konzentrisch sind, wenn das Fahrzeug in der Mulde positioniert ist, insbesondere wenn zumindest ein Rad des Fahrzeugs am tiefsten Punkt der Mulde positioniert ist. Von Vorteil ist dabei, dass die Wicklungen in einfacher Weise herstellbar sind und mittels einer von der jeweiligen Wicklung möglichst großen eingeschlossenen Fläche eine geringe Feldstärke erreichbar ist, so dass metallische Teile nur geringfügig erwärmt werden.

Bei einer vorteilhaften Ausgestaltung weisen die effektiv wirksamen Bereiche des Mäanders mittels zusätzlicher Wicklungsschleife oder Wicklungsschleifen eine Stromverdopplung oder Stromvermehrfachung auf. Von Vorteil ist dabei, dass

Bei einer vorteilhaften Ausgestaltung prägt eine Einspeisung, insbesondere mit einer das Fahrzeug für eine Rechnungsstellung ausreichend identifizierendem Abrechnungssystem, in den Primärleiter Strom ein. Von Vorteil ist dabei, dass

Bei einer vorteilhaften Ausgestaltung weist die elektronische Schaltung des Fahrzeugs zumindest einen Gleichrichter auf. Von Vorteil ist dabei, dass

Bei einer vorteilhaften Ausgestaltung umfasst das Fahrzeug ein Identifikationsmittel, insbesondere einen lesbaren Speicher.

Bei einer vorteilhaften Ausgestaltung ist mittels der elektronischen Schaltung ein Datenstrom erzeugbar, welcher aufmodulierbar ist auf den in der Sekundärwicklung übertragenen Stromanteil, insbesondere mit einer die Mittelfrequenz überschreitenden Frequenz. Von Vorteil ist dabei, dass für die Datenübertragung keine zusätzliche Verbindung oder zusätzliche Mittel notwendig sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erfindungsgemäße Ladestation mit Fahrzeug in Seitenansicht gezeichnet.

In der Figur 2 ist eine Draufsicht ohne Fahrzeug gezeigt.

In der Figur 3 ist eine andere Art der Verlegung des Primärleiters gezeigt.

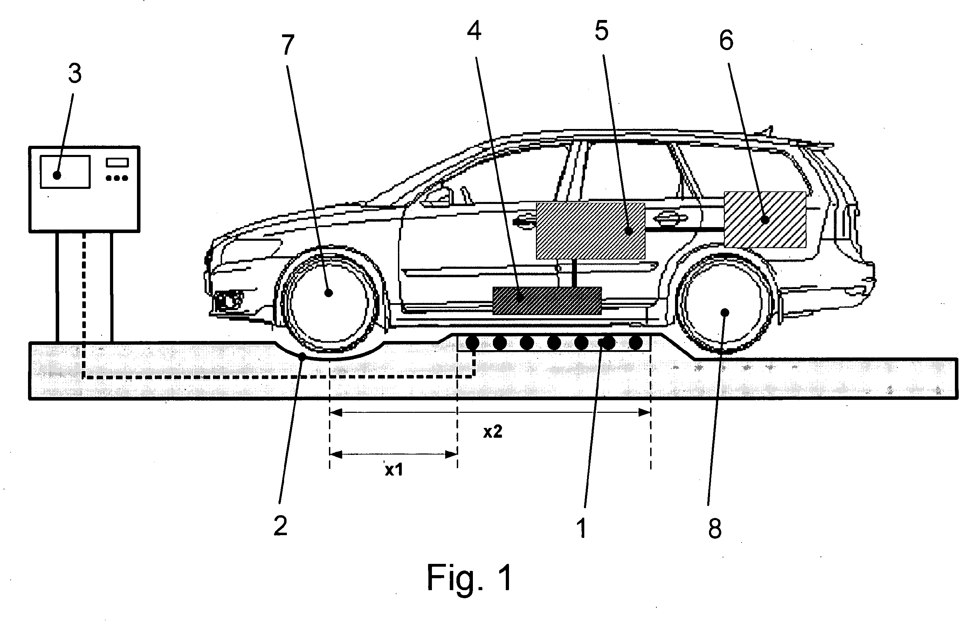

Gemäß Figur 1 wird bei der erfindungsgemäßen Ladestation eine Mulde 2 im Boden vorgesehen. Der Fahrer des Fahrzeuges kann somit die vorderen Räder 7 des Fahrzeuges in die Mulde 2 bringen, wobei im ausgekuppelten Zustand eine Selbstzentrierung des Fahrzeuges in einfacher Weise erreichbar ist, so dass die Räder 7 im Wesentlichen am tiefsten Punkt der Mulde zur Ruhe kommen.

Nach Erreichen dieser Position ist eine Beladung startbar.

Hierzu prägt die Einspeisung 3 mit Abrechnungssystem nach Erhalt der Freigabe einen mittelfrequenten Wechselstrom, insbesondere mit einer Frequenz zwischen 10 und 500 kHz, vorzugsweise zwischen 15 und 50 kHz, in den Primärleiter 1 ein.

Der Primärleiter 1 ist vorzugsweise in einer Erhebung angeordnet, die einen definierten Abstand von der Mulde 2 hat. Auf diese Weise ist der Boden des Fahrzeuges in nur geringem Abstand zum Primärleiter während der Beladung des Fahrzeugs. Die Erhebung befindet sich zwischen dem vorderen Rad 7 und dem hinteren Rad 8 des Fahrzeugs.

Eine im Fahrzeug angeordnete, vorzugsweise im Beriech des Fahrzeugbodens vorgesehene Sekundärwicklung ist in der erreichten Position des Fahrzeugs induktiv gekoppelt an den Primärleiter 1.

Der Sekundärwicklung ist eine Kapazität parallel oder in Reihe zugeschaltet, so dass die zugehörige Resonanzfrequenz im Wesentlichen der in den Primärleiter eingeprägten Mittelfrequenz entspricht.

Eine leichte Verschmutzung oder Vereisung der Erhebung verschlechtert den Wirkungsgrad nur unwesentlich.

Der an die Sekundärwicklung übertragene Energiefluss wird über eine elektronische Schaltung 5 einem Energiespeicher 6, insbesondere Akkumulator, zugeführt, so dass dieser aus dem Primärleiter berührungslos beladbar ist.

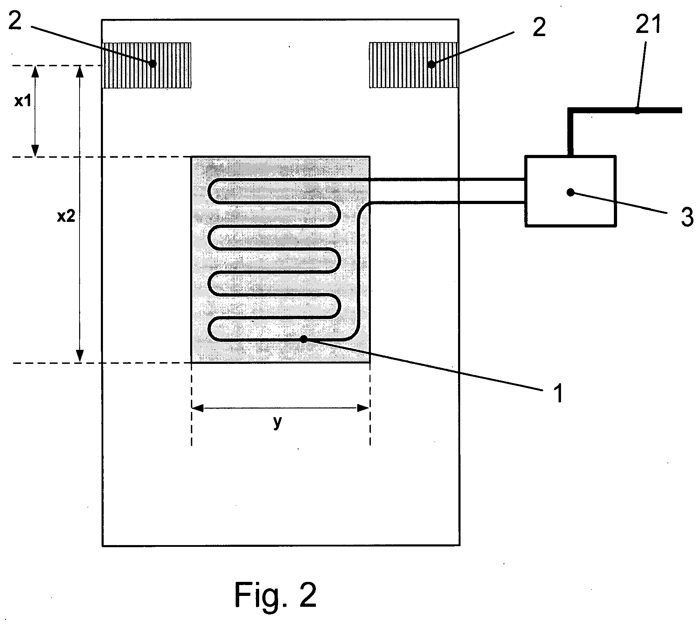

Wie in Figur 2 gezeigt ist, wird die Einspeisung 3 aus einem Drehstromnetz oder einphasigen Wechselstromnetz 21 versorgt.

Gemäß Figur 2 ist der Primärleiter 1 mäanderförmig verlegt. Bei geeigneter Ausführung der Sekundärwicklung ist somit auch bei Abweichungen des Fahrzeugs von der optimalen Lage eine berührungslose Energieübertragung erreichbar.

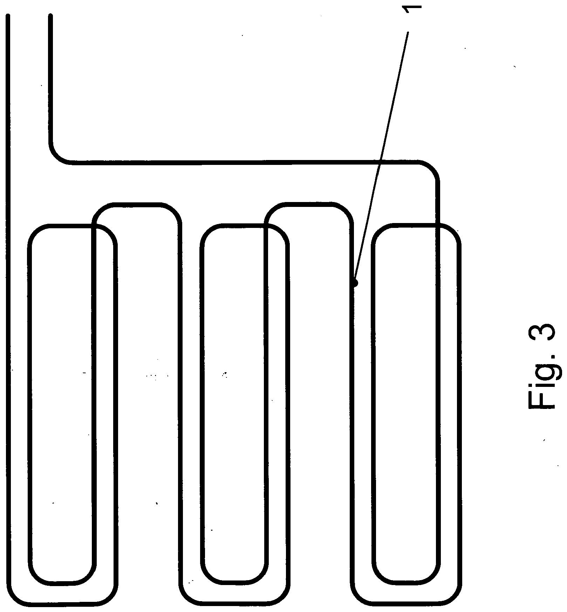

In Figur 3 ist für ein ähnliches erfindungsgemäßes Ausführungsbeispiel ebenfalls eine im Wesentlichen mäanderförmige Verlegung des Primärleiters 1 gezeigt.

Dabei wird jeder Wende des Mäanders eine oder in Weiterbildung mehrere Stromschleifen zugeordnet, so dass der gegenüber der Sekundärwicklung effektiv wirksame Strom gemäß Figur 3 sich verdoppelt oder in Weiterbildung vervielfacht.

Die Sekundärwicklung ist bei einer Ausführung nach Figur 2 oder 3 zumindest in zwei Teilwicklungen aufgeteilt, die jeweils an einem Schulterschenkel eines T-förmigen Ferritkerns vorgesehen sind, wobei der Mittelschenkel des T in der Normalenrichtung des Bodens beziehungsweise in Richtung der Normale der Erhebung ausgerichtet ist.

Bei einem weiteren erfindungsgemäßen Ausführungsbeispiel wird der Primärleiter als Ringspule im Bereich der Erhebung im Boden verlegt, beispielsweise vergossen, und die Sekundärwicklung ebenfalls als möglichst gleich große Ringspule ausgeführt. Dabei wird ein möglichst großer Durchmesser angestrebt, so dass die Feldstärke nur geringe Werte erreicht und somit eine Erwärmung metallischer Verschmutzungsreste oder Müllteile, wie Aluminiumhaltige Verpackungsreste, keine kritisch hohen Temperaturwerte erfahren, auch wenn sie im Bereich der berührungslosen Übertragung sich befinden.

### Bezugszeichenliste

1 Primärleiter
2 Mulde
3 Einspeisung mit Abrechnungssystem
4 Sekundärwicklung
5 elektronische Schaltung
6 Energiespeicher, insbesondere Akkumulator
7 vorderes Rad des Fahrzeugs
8 hinteres Rad des Fahrzeugs
21 Netzversorgung

## Patentansprüche

1. Ladestation für ein auf einem Boden bewegliches Fahrzeug mit Energiespeicher (6),
wobei ein Primärleiter (1) in einem Teilbereich des Bodens, der als Erhebung des Bodens ausgeführt ist, verlegt ist,
im Boden eine Mulde (2) angeordnet ist, so dass das Fahrzeug mittels zumindest eines Rades (7, 8), insbesondere mittels seiner beiden vorderen oder hinteren Räder (7, 8), in der Mulde (2) positionierbar ist, so dass eine Sekundärwicklung (4) des Fahrzeugs induktiv gekoppelt ist mit dem Primärleiterbereich,
wobei der Primärleiter (1) mäanderförmig verlegt ist,
wobei eine stationäre Einheit eine Anzeigevorrichtung zum Anzeigen eines Maßes an induktiver Kopplungsstärke und/oder eines Mindestwertes an übertragbarer Leistung umfasst.

2. Ladestation nach Anspruch 1,
**dadurch gekennzeichnet, dass**
die Mulde (2) optisch gekennzeichnet ist, insbesondere einen Farbanstrich aufweist, der unterschiedlich von der Erhebung ist, insbesondere mittels Farbgebung oder Markierungen besonders gut erkennbar ist.

3. Ladestation nach mindestens einem der vorangegangenen Ansprüche,
**dadurch gekennzeichnet, dass**
das Fahrzeug selbstpositionierend betreibbar ist,
insbesondere also der Antrieb des Fahrzeugs abkoppelbar ist von den als Antriebsrädern wirkenden Rädern (7, 8), insbesondere wodurch das Fahrzeug in den tiefsten Punkt sich einpendelt oder positioniert.

4. Ladestation nach mindestens einem der vorangegangenen Ansprüche,
**dadurch gekennzeichnet, dass**
der Primärleiter (1) von einer Einspeisung (3), insbesondere mit Abrechnungssystem, mit einem mittelfrequenten Wechselstrom beaufschlagt wird.

5. Ladestation nach mindestens einem der vorangegangenen Ansprüche,
**dadurch gekennzeichnet, dass**
der Sekundärwicklung (4) eine Kapazität derart in Reihe und/oder parallel zugeschaltet ist, dass die zugehörige Resonanzfrequenz im Wesentlichen der Mittelfrequenz entspricht.

6. Ladestation nach mindestens einem der vorangegangenen Ansprüche,
**dadurch gekennzeichnet, dass**
der Primärleiter (1) und die der Sekundärwicklung (4) jeweils als Ringwicklung verlegt ist, wobei die Ringwicklungen konzentrisch sind, wenn das Fahrzeug in der Mulde (2) positioniert ist, insbesondere wenn zumindest ein Rad (8) des Fahrzeugs am tiefsten Punkt der Mulde (2) positioniert ist.

7. Ladestation nach mindestens einem der vorangegangenen Ansprüche,
**dadurch gekennzeichnet, dass**
die effektiv wirksamen Bereiche des Mäanders mittels zusätzlicher Wicklungsschleife oder Wicklungsschleifen eine Stromverdopplung oder Stromvermehrfachung aufweisen.

8. Ladestation nach mindestens einem der vorangegangenen Ansprüche,
**dadurch gekennzeichnet, dass**
eine Einspeisung (3), insbesondere mit einer das Fahrzeug für eine Rechnungsstellung ausreichend identifizierendem Abrechnungssystem, in den Primärleiter (1) Strom einprägt.

9. Ladestation nach mindestens einem der vorangegangenen Ansprüche,
**dadurch gekennzeichnet, dass**
die elektronische Schaltung (5) des Fahrzeugs zumindest einen Gleichrichter aufweist.

10. Ladestation nach mindestens einem der vorangegangenen Ansprüche,
**dadurch gekennzeichnet, dass**
das Fahrzeug ein Identifikationsmittel umfasst, insbesondere einen lesbaren Speicher,

11. Ladestation nach mindestens einem der vorangegangenen Ansprüche,
**dadurch gekennzeichnet, dass**
mittels der elektronischen Schaltung (5) ein Datenstrom erzeugbar ist, welcher aufmodulierbar ist auf den in der Sekundärwicklung (4) übertragenen Stromanteil, insbesondere mit einer die Mittelfrequenz überschreitenden Frequenz.

## Claims

1. Charging station for a vehicle, said vehicle being movable on the ground and having an energy store (6),
wherein a primary conductor (1) is laid in a sub-area of the ground that is configured as a raised area of the ground,
a depression (2) is arranged in the ground so that the vehicle can be positioned in the depression (2) by means of at least one wheel (7, 8), in particular by means of its two front or rear wheels (7, 8), so that a secondary winding (4) of the vehicle is inductively coupled to the primary conductor area, wherein the primary conductor (1) is laid in a meander shape, wherein a stationary unit comprises a display device for displaying a measure of inductive coupling strength and/or a minimum value of transferable power.

2. Charging station according to claim 1,
**characterized in that**
the depression (2) is optically marked, in particular has a coat of paint that is different from the raised area, in particular is especially clearly visible by means of colouring or markings.

3. Charging station according to at least one of the preceding claims,
**characterized in that**
the vehicle can be operated in a self-positioning manner,
that is to say in particular the drive of the vehicle can be decoupled from the wheels (7, 8) that act as drive wheels, in particular as a result of which the vehicle settles or positions itself at the lowest point.

4. Charging station according to at least one of the preceding claims,
**characterized in that**
a medium-frequency alternating current is applied to the primary conductor (1) from an infeed (3), in particular having a billing system.

5. Charging station according to at least one of the preceding claims,
**characterized in that**
a capacitance is connected in series and/or in parallel with the secondary winding (4) such that the associated resonant frequency substantially corresponds to the medium frequency.

6. Charging station according to at least one of the preceding claims,
**characterized in that**
the primary conductor (1) and those of the secondary winding (4) is in each case laid as a ring winding, the ring windings being concentric when the vehicle is positioned in the depression (2), in particular when at least one wheel (8) of the vehicle is positioned at the lowest point of the depression (2).

7. Charging station according to at least one of the preceding claims,
**characterized in that**
the effectively active regions of the meander have a doubling of current or multiplication of current by means of additional winding loop or winding loops.

8. Charging station according to at least one of the preceding claims,
**characterized in that**
an infeed (3), in particular having a billing system that sufficiently identifies the vehicle for billing purposes, impresses current in the primary conductor (1).

9. Charging station according to at least one of the preceding claims,
**characterized in that**
the electronic circuit (5) of the vehicle has at least one rectifier.

10. Charging station according to at least one of the preceding claims,
**characterized in that**
the vehicle comprises an identification means, in particular a readable memory.

11. Charging station according to at least one of the preceding claims,
**characterized in that**,
by means of the electronic circuit (5), a data stream can be generated which can be modulated onto the current component that is transferred into the secondary winding (4), in particular with a frequency that exceeds the medium frequency.

## Revendications

1. Borne de recharge destinée à un véhicule mobile sur un sol et équipé d'un accumulateur d'énergie (6),
un conducteur primaire (1) étant implanté dans une région partielle du sol, conçue comme une zone surélevée dudit sol,
une cuvette (2) étant ménagée dans le sol, de façon telle que le véhicule puisse être positionné dans ladite cuvette (2) à l'aide d'au moins une roue (7, 8), en particulier à l'aide de ses deux roues avant ou arrière (7, 8), si bien qu'un enroulement secondaire (4) dudit véhicule est couplé par induction à la région dudit conducteur primaire,
lequel conducteur primaire (1) est agencé en forme de méandre,
sachant qu'une unité fixe inclut un dispositif d'affichage réalisé pour afficher un niveau d'intensité de couplage par induction et/ou une valeur minimale de puissance transmissible.

2. Borne de recharge selon la revendication 1,
**caractérisée par le fait que**
la cuvette (2) est balisée optiquement, est notamment pourvue d'un revêtement de peinture colorée différant de la zone surélevée et est, notamment, particulièrement bien identifiable au moyen d'une coloration ou de repères.

3. Borne de recharge selon au moins l'une des revendications précédentes,
**caractérisée par le fait que**
le véhicule peut être actionné avec positionnement automatique,
c'est-à-dire, en particulier, que l'entraînement dudit véhicule peut être découplé d'avec les roues (7, 8) agissant comme des roues motrices, d'où il résulte notamment que ledit véhicule vient se stabiliser ou se positionner au point le plus bas.

4. Borne de recharge selon au moins l'une des revendications précédentes,
**caractérisée par le fait que**
le conducteur primaire (1) est sollicité par un courant alternatif de fréquence moyenne à partir d'une alimentation (3) munie, en particulier, d'un système de comptabilisation.

5. Borne de recharge selon au moins l'une des revendications précédentes,
**caractérisée par le fait**
**qu'**un condensateur est connecté à l'enroulement secondaire (4), en série et/ou en parallèle, de telle sorte que la fréquence de résonance associée corresponde, pour l'essentiel, à la fréquence moyenne.

6. Borne de recharge selon au moins l'une des revendications précédentes,
**caractérisée par le fait que**
le conducteur primaire (1) et l'enroulement secondaire (4) sont agencés en tant qu'enroulement respectif en anneau,
les enroulements en anneau étant concentriques lorsque le véhicule est positionné dans la cuvette (2), en particulier lorsqu'au moins une roue (8) dudit véhicule est positionnée au point le plus bas de ladite cuvette (2).

7. Borne de recharge selon au moins l'une des revendications précédentes,
**caractérisée par le fait que**
les régions effectivement opérantes du méandre présentent, au moyen d'une boucle d'enroulement ou de boucles d'enroulement additionnelle(s), un doublement de courant ou une multiplication de courant.

8. Borne de recharge selon au moins l'une des revendications précédentes,
**caractérisée par le fait**
**qu'**une alimentation (3), notamment pourvue d'un système de comptabilisation identifiant suffisamment le véhicule à des fins de facturation, injecte du courant dans le conducteur primaire (1).

9. Borne de recharge selon au moins l'une des revendications précédentes,
**caractérisée par le fait que**
le circuit électronique (5) du véhicule comporte au moins un redresseur.

10. Borne de recharge selon au moins l'une des revendications précédentes,
**caractérisée par le fait que**
le véhicule inclut un moyen d'identification, en particulier une mémoire lisible.

11. Borne de recharge selon au moins l'une des revendications précédentes,
**caractérisée par le fait**
**qu'**un flux de données, pouvant être engendré au moyen du circuit électronique (5), peut être modulé sur la composante de courant transmise dans l'enroulement secondaire (4), en particulier avec une fréquence excédant la fréquence moyenne.
